## Europäisches Patentamt
## European Patent Office
## Office européen des brevets

(11) Veröffentlichungsnummer: **0 276 689 B1**

(12) **EUROPÄISCHE PATENTSCHRIFT**

(45) Veröffentlichungstag der Patentschrift: **21.11.91**

(21) Anmeldenummer: **88100434.5**

(22) Anmeldetag: **14.01.88**

(51) Int. Cl.⁵: **G01C 21/16**

54 **Trägheitssensoranordnung.**

(30) Priorität: **24.01.87 DE 3702022**

(43) Veröffentlichungstag der Anmeldung:
**03.08.88 Patentblatt 88/31**

(45) Bekanntmachung des Hinweises auf die
Patenterteilung:
**21.11.91 Patentblatt 91/47**

(84) Benannte Vertragsstaaten:
**DE FR GB SE**

(56) Entgegenhaltungen:
**EP-A- 0 146 850**
**GB-A- 2 108 724**
**GB-A- 2 118 302**
**US-A- 3 438 270**

(73) Patentinhaber: **Bodenseewerk Gerätetechnik GmbH**
**Alte Nussdorfer Strasse 15 Postfach 1120**
**W-7770 Überlingen/Bodensee(DE)**

(72) Erfinder: **Hagen, Kempas, Dipl.-Ing.**
**Kreuzstrasse 25 A**
**W-7770 Überlingen 12(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

Rank Xerox (UK) Business Services

## Beschreibung

TECHNISCHES GEBIET

Die Erfindung betrifft eine Trägheitssensoranordnung zur Messung der auf drei Achsen bezogenen Komponenten der Winkelgeschwindigkeit und der Beschleunigung.

Solche Trägheitssensoranordnungen werden beispielsweise in Flugreglern zur Stabilisierung von Flugzeugen oder auch in Navigationsgeräten wie Strapdown-Trägheitsnavigationssystemen benutzt.

ZUGRUNDELIEGENDER STAND DER TECHNIK

Übliche Trägheitssensoranordnungen der vorliegenden Art enthalten entweder drei einachsige Wendekreisel, z.B. Laserkreisel oder Schwimmkreisel, oder zwei zweiachsige Wendekreisel, z.B. dynamisch abgestimmte Kreisel, zusammen mit drei Beschleunigungsmessern. Die Wendekreisel messen die Winkelgeschwindigkeiten um zwei zueinander orthogonale Achsen. Bei Verwendung zweier zweiachsiger Wendekreisel sind diese Wendekreisel so angeordnet, daß zu jeder dieser drei orthogonalen Achsen jeweils mindestens eine der insgesamt vier Eingangsachsen der Wendekreisel parallel ist. Die Beschleunigungsmesser bilden gesonderte Bauteile und sind mit ihren Eingangsachsen ebenfalls nach den drei orthogonalen Achsen ausgerichtet.

Bei diesen bekannten Trägheitssensoranordnungen sind mindestens fünf gesonderte Trägheitssensoren erforderlich. Diese sind von unterschiedlicher Art, nämlich z.B. zwei zweiachsige Wendekreisel und drei Beschleunigungsmesser.

Es sind dynamisch abgestimmte Kreisel bekannt. Bei solchen dynamisch abgestimmten Kreiseln ist der Kreiselrotor mit der Antriebsachse des Motors über einen Kardanrahmen verbunden, der über Federgelenke einerseits mit der Antriebsachse und andererseits mit dem Kreiselrotor verbunden ist. Bei einer Auslenkung des Kreiselgehäuses gegenüber dem Kreiselrotor würden normalerweise die Federgelenke ein Moment auf den Kreiselrotor hervorrufen, welches diesen veranlaßt, seine Bezugslage im Raum zu ändern. Bei einem dynamisch abgestimmten Kreisel ist die Abstimmung so gewählt, daß die durch die Federgelenke hervorgerufenen Momente durch dynamische Momente kompensiert werden. Diese dynamischen Momente werden durch oszillierende Bewegung des Kardanrahmens verursacht, die bei Auslenkung des Kreiselgehäuses relativ zu dem raumfesten Kreiselrotor auftritt.

Eine vorteilhafte Konstruktion einer solchen Kardanrahmenanordnung ist in der DE-PS 3 213 720 und der inhaltsgleichen US-PS 4 592 242 beschrieben.

Ein so dynamisch abgestimmter Kreisel verhält sich bei kleinen Auslenkwinkeln wie ein freier Kreisel. Es sind nun Abgriffe vorgesehen, die auf die Auslenkung des Kreiselrotors aus einer Mittellage um eine erste bzw. um eine zweite, zu der ersten und zu der Drallachse senkrechte Eingangsachse ansprechen. Weiterhin sind auf den Eingangsachsen Drehmomenterzeuger mit Spulen angeordnet, durch welche Drehmomente um die Eingangsachsen auf den Kreiselrotor ausübbar sind. Die Drehmomenterzeuger sind von den Abgriffssignalen gesteuert, und zwar so, daß der auf die Auslenkungen um die eine Eingangsachse ansprechende Abgriff auf den um die andere Eingangsachse wirksamen Drehmomenterzeuger geschaltet ist und umgekehrt. Es wird so auf den Kreiselrotor jeweils ein der Auslenkung entgegenwirkendes Drehmoment ausübt. Dieses Drehmoment, das erforderlich ist, um den Kreiselrotor relativ zum Gehäuse in seiner Mittellage zu halten, ist proportional der inertialen Drehgeschwindigkeit des Gehäuses um die betreffende Eingangsachse.

Ein solcher zweiachsiger Wendekreisel ist bekannt durch die US-PS 3 438 270. Eine andere vorteilhafte Konstruktion eines solchen zweiachsigen Wendekreisels zeigt die DE-OS 3 346 185 und die im wesentlichen inhaltsgleiche EP-OS 146 850.

Es ist bekannt, daß die Kreiselsignale solcher elektrisch gefesselter, zweiachsiger Wendekreisel außer von den zu messenden Winkelgeschwindigkeiten durch Masseunwuchten des Kreisels auch von den Komponenten der Linearbeschleunigung abhängen können (DE-PS 3 143 527). Eine solche Beschleunigungsabhängigkeit wird als Störeinfluß angesehen. Die DE-PS 3 143 527 beschreibt Maßnahmen, um diesen Störeinfluß zu eliminieren.

OFFENBARUNG DER ERFINDUNG

Der Erfindung liegt die Aufgabe zugrunde, eine Trägheitssensoranordnung mit einer möglichst geringen Anzahl von Trägheitssensoren aufzubauen.

Der Erfindung liegt weiterhin die Aufgabe zugrunde, eine möglichst kompakte Trägheitssensoranordnung zu schaffen.

Der Erfindung liegt weiter die Aufgabe zugrunde, eine Trägheitssensoranordnung für die Messung von Winkelgeschwindigkeiten und Beschleunigungen mit einem einheitlichen Typ von Trägheitssensoren aufzubauen.

Erfindungsgemäß werden diese Aufgaben dadurch gelöst, daß

(a) drei zweiachsige Wendekreisel vorgesehen sind,

(b) die Wendekreisel definiert unterschiedliche Beschleunigungsempfindlichkeit zeigen und

(c) die sechs Kreiselsignale der Wendekreisel zur Bildung von sechs Ausgangssignalen so linearkombiniert sind, daß

- drei Ausgangssignale beschleunigungsunabhängig die Komponenten der Winkelgeschwindigkeit und
- drei Ausgangssignale winkelgeschwindigkeitsunabhängig die Komponenten der Beschleunigung wiedergeben.

Es sind somit erfindungsgemäß für die Messung der drei Winkelgeschwindigkeitskomponenten und der drei Beschleunigungskomponenten nur drei Trägheitssensoren vorgesehen, nämlich drei zweiachsige Wendekreisel. Diese dienen gleichzeitig zur Messung der Beschleunigungen, so daß gesonderte Beschleunigungsmesser entfallen können. Das wird dadurch erreicht, daß die Beschleunigungsabhängigkeit der Kreiselsignale, normalerweise ein unerwünschter Störeinfluß, bewußt und in definierter Weise herbeigeführt wird. Dabei ist die Beschleunigungsabhängigkeit der Kreiselsignale für die drei zweiachsigen Wendekreisel unterschiedlich. Die insgesamt sechs Kreiselsignale, die Linearkombinationen von Winkelgeschwindigkeiten und Beschleunigungen darstellen, liefern somit sechs linear unabhängige Gleichungen für die sechs gesuchten Größen, nämlich die drei Komponenten des Winkelgeschwindigkeitsvektors und die drei Komponenten des Beschleunigungsvektors. Diese sechs gesuchten Größen können, wenn die Faktoren der Linearkombination bekannt sind, durch eine geeignete Signalverarbeitung aus den sechs Kreiselsignalen gebildet werden.

Die nur drei Trägheitssensoren in Form der drei zweiachsigen Wendekreisel können sehr kompakt in einem Sensorblock vereinigt werden. Es ist nur ein Typ von Trägheitssensoren, nämlich ein zweiachsiger Wendekreisel, vorhanden. Das vereinfacht die Fertigung, Lagerhaltung und Wartung.

Ausgestaltungen der Erfindung sind Gegenstand der abhängigen Patentansprüche.

## KURZE BESCHREIBUNG DER ZEICHNUNGEN

Fig. 1    zeigt schematisch-perspektivisch eine Trägheitssensoranordnung mit drei zweiachsigen Wendekreiseln.

Fig. 2    ist ein Blockdiagramm der drei zweiachsigen Wendekreisel mit den Einflußgrößen Winkelgeschwindigkeit und Beschleunigung und den erzeugten Signalen.

Fig. 3    veranschaulicht die Verarbeitung der Kreiselsignale.

Fig. 4    zeigt teilweise im Schnitt den konstruktiven Aufbau des Sensorblocks mit den drei zweiachsigen Wendekreiseln.

## BEVORZUGTE AUSFÜHRUNG DER ERFINDUNG

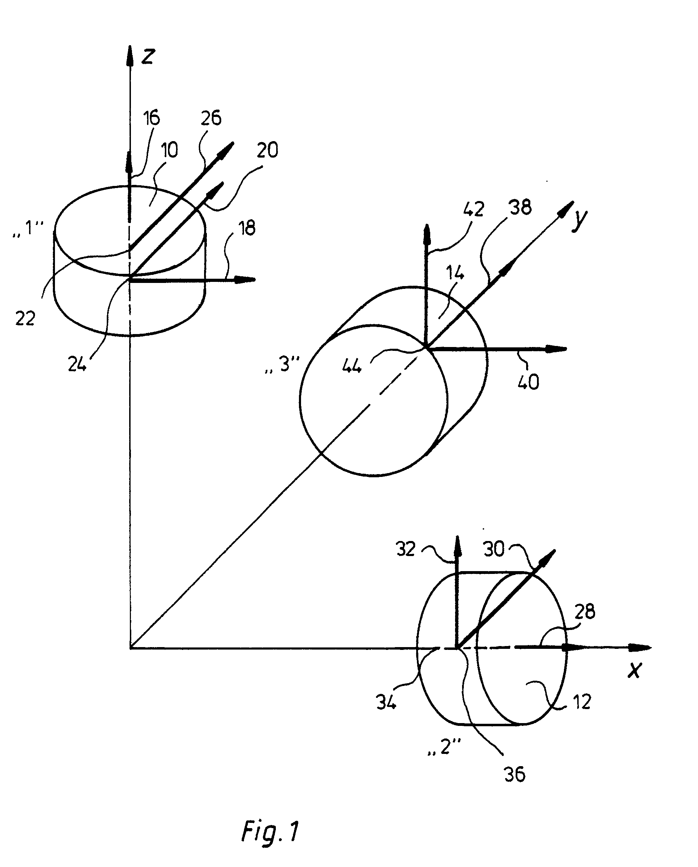

Fig.1 veranschaulicht das Prinzip der Trägheitssensoranordnung.

Die Trägheitssensoranordnung enthält einen ersten zweiachsigen Wendekreisel 10, einen zweiten zweiachsigen Wendekreisel 12 und einen dritten zweiachsigen Wendekreisel 14. Es sollen die Komponenten der Winkelgeschwindigkeit und der Beschleunigung bezogen auf eine erste Achse x, eine zweite Achse y und eine dritte Achse z bestimmt werden. Diese drei Achsen x,y und z stehen aufeinander senkrecht und bilden ein orthogonales Koordinatensystem.

Die Drallachse 16 des ersten Wendekreisels 10 ist nach der dritten Achse z (oder parallel zu dieser) ausgerichtet. Senkrecht zu der Drallachse 16 und zueinander liegen die beiden Eingangsachsen 18 und 20 des Wendekreisels 10. Die Eingangsachse 18 ist parallel zu der ersten Achse x. Die Eingangsachse 20 ist parallel zu der zweiten Achse y. Der erste Wendekreisel 10 hat eine axiale Unwucht.

Der Masseschwerpunkt 22 des Kreiselrotors liegt auf der Drallachse 16 aber gegenüber dem Schnittpunkt 24 der Eingangsachsen 18,20 um welchen der Kreiselrotor beweglich ist, etwas in Richtung des Drallvektors, d.h. nach oben in Fig. 1 versetzt. Der erste Wendekreisel 10 spricht daher nicht nur auf Winkelgeschwindigkeiten sondern auch auf Beschleunigungen quer zur Drallachse 16 an.

Eine Beschleunigung $b_y$ in Richtung der zweiten Achse y erzeugt eine im Masseschwerpunkt 22 angreifende Kraft, wie in Fig.1 durch einen Pfeil 26 angedeutet ist. Diese Kraft wirkt an einem dem Abstand von Masseschwerpunkt 22 und Schnittpunkt 24 entsprechenden Hebelarm und erzeugt ein Drehmoment um die zu der ersten Achse x parallele Eingangsachse 18. Dieses Drehmoment bewirkt eine Auslenkung des Kreiselrotors um die andere Eingangsachse 20 mit einer dem Drehmoment proportionalen Winkelgeschwindigkeit. Es wird also eine Winkelgeschwindigkeit um die Eingangsachse 20 simuliert, der durch ein Drehmoment des um die Eingangsachse 18 wirksamen Drehmomenterzeugers entgegengewirkt wird. Eine Beschleunigung in Richtung der zweiten Achse y erzeugt somit einen dazu proportionalen Anteil in dem einer Winkelgeschwindigkeit um die zweite Achse y oder Eingangsachse 20 entsprechenden Kreiselsignal $\omega_{y1}$ des ersten Wendekreisels 10. Der Proportionalitätsfaktor sei mit "$K_{b1}$" bezeichnet.

Entsprechend wirkt sich eine Beschleunigung in Richtung der ersten Achse x in einem dazu proportionalen Anteil in dem einer Winkelgeschwindigkeit um die erste Achse x oder Eingangsachse 18 entsprechenden Kreiselsignal $\omega_{x1}$ des ersten

Wendekreisels 10 aus.

Die Drallachse 28 des zweiten Wendekreisels 12 ist nach der ersten Achse x oder parallel zu dieser ausgerichtet. Senkrecht zu der Drallachse 28 und zueinander liegen die beiden Eingangsachsen 30 und 32 des Wendekreisels 12. Die Eingangsachse 30 ist parallel zu der zweiten Achse y. Die Eingangsachse 32 ist parallel zu der dritten Achse z. Der zweite Wendekreisel 12 hat ebenfalls eine axiale Unwucht. Der Masseschwerpunkt 34 des Kreiselrotors liegt auf der Drallachse 28 aber gegenüber dem Schnittpunkt 36 der Eingangsachsen 30,32, um welchen der Kreiselrotor beweglich ist, etwas entgegen der Richtung des Drallvektors 28, d.h. nach links in Fig.1 versetzt. Auch der zweite Wendekreisel 12 spricht daher nicht nur auf Winkelgeschwindigkeiten sondern auch auf Beschleunigungen quer zur Drallachse 28 an.

Eine Beschleunigung in Richtung der zweiten Achse y erzeugt somit nach dem oben im Zusammenhang mit dem ersten Wendekreisel beschriebenen Mechanismus einen Anteil des Kreiselsignals $\omega_{y2}$, das einer Winkelgeschwindigkeit um die zweite Achse y und die Eingangsachse 30 entspricht. Bei gleicher Richtung der Beschleunigung hat dieser Anteil aber das entgegengesetzte Vorzeichen zu dem Anteil der in dem entsprechenden Kreiselsignal $\omega_{y1}$ des Wendekreisels 10 auftritt. Das liegt daran, daß der Masseschwerpunkt 34 in bezug auf den Schnittpunkt der Eingangsachsen entgegen der Richtung des Drallvektors 28 versetzt ist und nicht wie bei Wendekreisel 10 in Richtung des Drallvektors. Der Proportionalitätsfaktor $K_{b2}$ zwischen der Beschleunigungskomponente und dem besagten Anteil des Kreiselsignals ist mit entgegengesetztem Vorzeichen gleich dem Proportionalitätsfaktor $K_{b1}$ beim Wendekreisel 10.

Die Drallachse 38 des dritten Wendekreisels 14 ist nach der zweiten Achse y oder parallel zu dieser ausgerichtet. Senkrecht zu der Drallachse 38 und zueinander liegen die beiden Eingangsachsen 40 und 42 des Wendekreisels 14. Die Eingangsachse 40 ist parallel zu der ersten Achse x. Die Eingangsachse 42 ist parallel zu der dritten Achse z. Der dritte Wendekreisel 14 ist bestmöglich ausgewuchtet. Sein Masseschwerpunkt fällt mit dem Schnittpunkt 44 der Eingangsachsen 40,42 zusammen. Somit spricht der dritte Wendekreisel 14 nur auf Winkelgeschwindigkeiten an und wird von Beschleunigungen nicht beeinflußt.

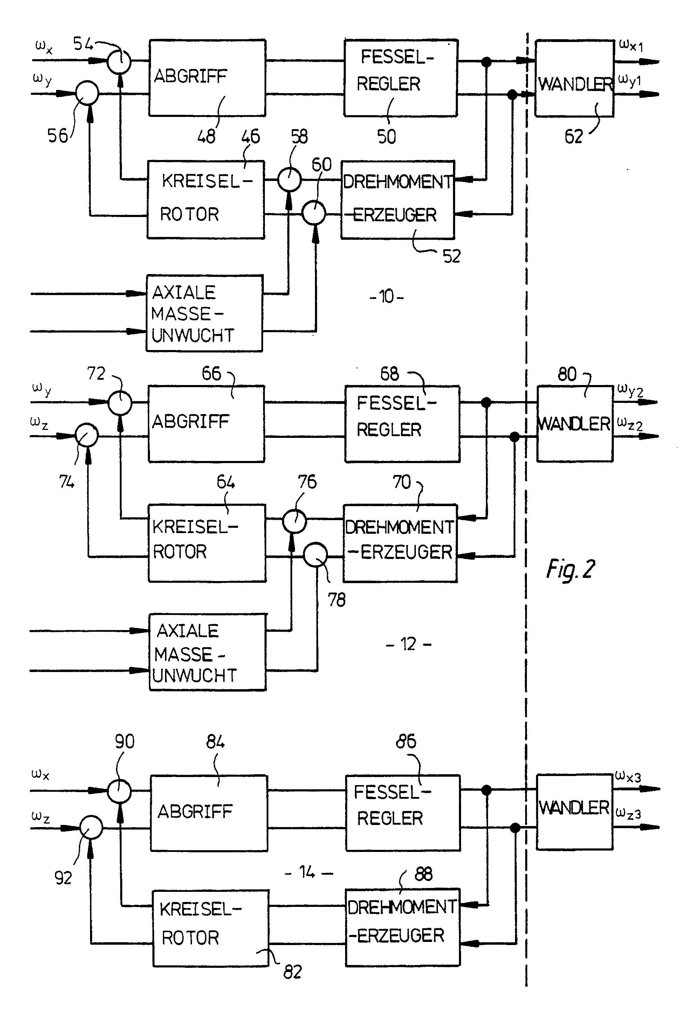

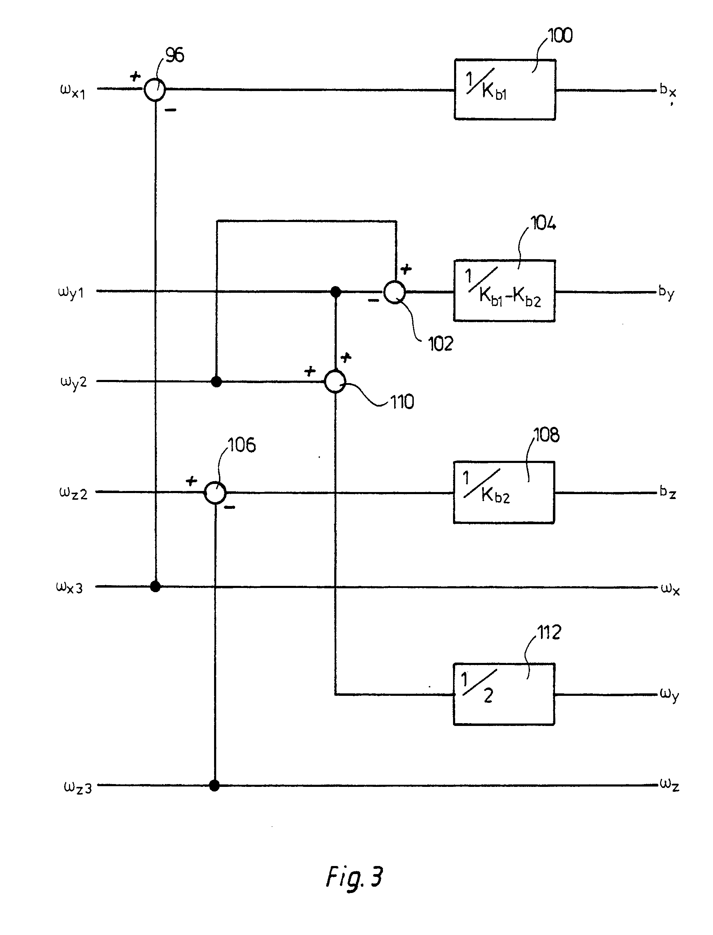

Fig.2 ist ein Blockdiagramm der Trägheitssensoranordnung mit dem ersten Wendekreisel 10, dem zweiten Wendekreisel 12 und dem dritten Wendekreisel 14.

In Fig.2 ist mit 46 der Kreiselrotor des ersten Wendekreisels 10 bezeichnet. Dieser Kreiselrotor 46 ist, wie oben im Zusammenhang mit dem dynamisch abgestimmten Kreisel erläutert wurde, mechanisch momentenfrei gehalten und sucht daher seine Lage im Raum beizubehalten. Eine Winkelgeschwindigkeit des Kreiselgehäuses mit den Komponenten $\omega_x$ und $\omega_y$ bewirkt Auslenkungen des Kreiselgehäuses gegenüber dem Kreiselrotor 46. Diese Auslenkungen werden von Abgriffen 48 abgegriffen. Die Abgriffe 48 liefern Abgriffsignale $\alpha_{x1}$ und $\alpha_{y1}$ nach Maßgabe der Auslenkung des Kreiselgehäuses gegenüber dem Kreiselrotor um die Eingangsachse 18 bzw. um die Eingangsachse 20. Diese Abgriffssignale $\alpha_{x1}$ und $\alpha_{y1}$ sind auf einen Fesselregler 50 geschaltet. Der Fesselregler 50 liefert Ausgangsströme $I_{x1}$ und $I_{x2}$ nach Maßgabe der Abgriffsignale $\alpha_{x1}$ bzw. $\alpha_{x2}$ . Diese Ausgangsströme werden auf Drehmomenterzeuger 52 gegeben. Der Ausgangsstrom $I_{x1}$ , der durch die Auslenkung um die Eingangsachse 18 hervorgerufen wurde, wird auf einen um die Eingangsachse 20 wirksamen Drehmomenterzeuger geschaltet. Dieser Drehmomenterzeuger übt auf den Kreiselrotor 46 ein Drehmoment $M_{y1}$ um die Eingangsachse 20 aus. Der Ausgangsstrom $I_{y1}$ , der durch die Auslenkung um die Eingangsachse 20 hervorgerufen wurde, wird auf einen um die Eingangsachse 18 wirksamen Drehmomenterzeuger geschaltet. Dieser Drehmomenterzeuger übt auf den Kreiselrotor 46 ein Drehmoment $M_{x1}$ um die Eingangsachse 18 aus. Der Kreiselrotor 46 wird dadurch mit solchen Winkelgeschwindigkeiten ausgelenkt und dem Kreiselgehäuse mit dem Abgriffen 48 nachgeführt, daß die Abgriffsignale $\alpha_{x1}$ und $\alpha_{y1}$ praktisch auf null gehalten werden. Das ist durch Summationspunkte 54 und 56 in Fig.2 angedeutet. Das ist die normale elektrische Fesselung des Wendekreisels 10.

Durch die axiale Unwucht des Kreiselrotors 46 wirken auf diesen Kreiselrotor 46 noch Drehmomente, die von den in Richtung der ersten Achse x und der zweiten Achse y fallenden Komponenten $b_x$ bzw. $b_y$ der Beschleunigung herrühren. Diese Drehmomente sind, wie oben erläutert, den Komponenten der Beschleunigung mit einem Faktor $K_{b1}$ proportional. Das der Komponente $b_x$ proportionale Drehmoment wirkt um die Eingangsachse 20, wird also dem um die Eingangsachse 20 von dem Drehmomenterzeuger 52 ausgeübten Drehmoment $M_{y1}$ überlagert. Das ist in dem Diagramm von Fig.2 durch einen Summationspunkt 58 angedeutet. Das der Komponente $b_y$ proportionale Drehmoment wirkt um die Eingangsachse 18, wird also dem um die Eingangsachse 18 von dem Drehmomenterzeuger 52 ausgeübten Drehmoment $M_{x1}$ überlagert. Das ist durch den Summationspunkt 60 angedeutet. Die von den Drehmomenterzeugern 52 auf den Kreiselrotor 46 ausgeübten Drehmomente $M_{y1}$ und $M_{x1}$ werden daher durch den Fesselregler 50 auf einen solchen Wert geregelt, daß sie nicht nur den Kreiselrotor 46 dem Kreiselgehäuse mit dessen Winkelgeschwindigkeits-Komponenten $\omega_x$ und $\omega_y$

nachführen sondern auch die durch die Komponenten der Beschleunigung $b_x$ und $b_y$ hervorgerufenen Drehmomente und die dadurch bedingten Winkelgeschwindigkeiten des Kreiselrotors 46 kompensieren. Die Ausgangsströme $I_{x1}$ und $I_{y1}$ des Fesselreglers 50 sind daher Linearkombinationen der Komponenten der Winkelgeschwindigkeit $\omega_x$, $\omega_y$ und der Komponenten der Beschleunigung $b_x$, $b_y$. Diese Ausgangsströme $I_{x1}$ und $I_{y1}$ werden durch Wandler 62 in Kreiselsignale $\omega_{x1}$ und $\omega_{y1}$ umgesetzt. Das Kreiselsignal $\omega_{x1}$ entspricht dabei einer Winkelgeschwindigkeit um die erste Achse x oder Eingangsachse 18. Das Kreiselsignal $\omega_{y1}$ entspricht dabei einer Winkelgeschwindigkeit um die zweite Achse y.

In entsprechender Weise ist der zweite Wendekreisel 12 aufgebaut.

Mit 64 ist der Kreiselrotor des zweiten Wendekreisels 12 bezeichnet. Eine Winkelgeschwindigkeit des Kreiselgehäuses mit den Komponenten $\omega_y$ und $\omega_z$ bewirkt Auslenkungen des Kreiselgehäuses gegenüber dem Kreiselrotor 64. Diese Auslenkungen werden von Abgriffen 66 abgegriffen. Die Abgriffe 66 liefern Abgriffsignale $\alpha_{y2}$ und $\alpha_{z2}$ nach Maßgabe der Auslenkung des Kreiselgehäuses gegenüber dem Kreiselrotor 64 um die Eingangsachse 30 bzw. um die Eingangsachse 32. Diese Abgriffsignale $\alpha_{y2}$ und $\alpha_{z2}$ sind auf einen Fesselregler 68 geschaltet. Der Fesselregler 68 liefert Ausgangsströme $I_{y2}$ und $I_{z2}$ nach Maßgabe der Abgriffsignale $\alpha_{y2}$ und $\alpha_{z2}$. Diese Ausgangsströme werden auf Drehmomenterzeuger 70 gegeben. Der Ausgangsstrom $I_{y2}$, der durch die Auslenkung um die Eingangsachse 30 hervorgerufen wurde, wird auf einen um die Eingangsachse 32 wirksamen Drehmomenterzeuger geschaltet. Dieser Drehmomenterzeuger übt auf den Kreiselrotor 64 ein Drehmoment $M_{z2}$ um die Eingangsachse 32 aus. Der Ausgangsstrom $I_{z2}$, der durch die Auslenkung um die Eingangsachse 32 hervorgerufen wurde, wird auf einen um die Eingangsachse 30 wirksamen Drehmomenterzeuger geschaltet. Dieser Drehmomenterzeuger übt auf den Kreiselrotor 64 ein Drehmoment $M_{y2}$ um die Eingangsachse 30 aus. Der Kreiselrotor 64 wird so dem Kreiselgehäuse mit entsprechenden Winkelgeschwindigkeiten nachgeführt. Das ist durch Summationspunkte 72 und 74 angedeutet. Das ist wieder die normale elektrische Fesselung des Wendekreisels 12.

Durch die axiale Unwucht des Kreiselrotors 64 wirken auf diesen Kreiselrotor 64 noch Drehmomente, die von den in Richtung der zweiten Achse y und der dritten Achse z fallenden Komponenten $b_y$ bzw. $b_z$ der Beschleunigung herrühren. Diese Drehmomente sind den Komponenten der Beschleunigung mit einem Faktor $K_{b2}$ proportional. Das der Komponente $b_y$ proportionale Drehmoment wirkt um die Eingangsachse 32, wird also dem um die Eingangsachse 32 von dem Drehmomenterzeuger 70 ausgeübten Drehmoment $M_{z2}$ überlagert. Das ist in dem Diagramm von Fig.2 durch einen Summationspunkt 76 angedeutet. Das der Komponente $b_z$ proportionale Drehmoment wirkt um die Eingangsachse 30, wird also dem um die Eingangsachse 30 von dem Drehmomenterzeuger 70 ausgeübten Drehmoment $M_{y2}$ überlagert. Das ist durch den Summationspunkt 78 angedeutet. Die von den Drehmomenterzeugern 70 auf den Kreiselrotor 64 ausgeübten Drehmomente $M_{y2}$ und $M_{z2}$ werden daher durch den Fesselregler 68 auf einen solchen Wert geregelt, daß sie nicht nur den Kreiselrotor 64 dem Kreiselgehäuse mit dessen Winkelgeschwindigkeits-Komponenten $\omega_y$ und $\omega_z$ nachführen sondern auch die durch die Komponenten der Beschleunigung $b_x$ und $b_y$ hervorgerufenen Drehmomente und die dadurch bedingten Winkelgeschwindigkeiten des Kreiselrotors 64 kompensieren. Die Ausgangsströme $I_{y2}$ und $I_{z2}$ des Fesselreglers 68, die wieder Linearkombinationen der Komponenten der Winkelgeschwindigkeit $\omega_y$, $\omega_z$ und der Komponenten der Beschleunigung $b_y$, $b_z$ sind, werden durch Wandler in Kreiselsignale $\omega_{y2}$ und $\omega_{z2}$ umgesetzt. Das Kreiselsignal $\omega_{z2}$ entspricht dabei wieder einer Winkelgeschwindigkeit um die zweite Achse y oder die Eingangsachse 30. Das Kreiselsignal $\omega_{z2}$ entspricht einer Winkelgeschwindigkeit um die dritte Achse z.

Der dritte Kreisel 14 enthält einen Kreiselrotor 82. Eine Winkelgeschwindigkeit des Kreiselgehäuses mit den Komponenten $\omega_x$ und $\omega_z$ bewirkt Auslenkungen des Kreiselgehäuses gegenüber dem Kreiselrotor 82. Diese Auslenkungen werden von Abgriffen 84 abgegriffen. Die Abgriffe 84 liefern Abgriffsignale $\alpha_{x3}$ und $\alpha_{z3}$ nach Maßgabe der Auslenkung des Kreiselgehäuses gegenüber dem Kreiselrotor 82 um die Eingangsachse 40 bzw. um die Eingangsachse 42. Diese Abgriffsignale $\alpha_{x3}$ und $\alpha_{z3}$ sind auf einen Fesselregler 86 geschaltet. Der Fesselregler 86 liefert Ausgangsströme $I_{x3}$ und $I_{z3}$ nach Maßgabe der Abgriffsignale $\alpha_{x3}$ und $\alpha_{z3}$. Diese Ausgangsströme werden auf Drehmomenterzeuger 88 geschaltet. Der Ausgangsstrom $I_{x3}$, der durch die Auslenkung um die Eingangsachse 40 hervorgerufen wurde, wird auf einen um die Eingangsachse 42 wirksamen Drehmomenterzeuger geschaltet. Dieser Drehmomenterzeuger übt auf den Kreiselrotor 82 ein Drehmoment $M_{z3}$ um die Eingangsachse 42 aus. Der Ausgangsstrom $I_{z3}$, der durch die Auslenkung um die Eingangsachse 42 hervorgerufen wurde, wird auf einen um die Eingangsachse 40 wirksamen Drehmomenterzeuger geschaltet. Dieser Drehmomenterzeuger übt auf den Kreiselrotor 82 ein Drehmoment $M_{x3}$ um die Eingangsachse 40 aus. Der Kreiselrotor 82 wird so dem Kreiselgehäuse mit entsprechenden Winkelgeschwindigkeiten nachgeführt. Das ist durch Summationspunkte 90 und 92 angedeutet. Das ist wieder die normale elektrische Fesselung des Wendekreisels 14.

Im Gegensatz zu den Wendekreiseln 10 und 12 hat der dritte Wendekreisel 14 keine bewußt angebrachte axiale Unwucht. Er spricht daher nur auf Winkelgeschwindigkeits-Komponenten $\omega_x$ und $\omega_z$ um die Eingangsachsen 40 und 42 an.

Die Ausgangsströme $I_{x3}$ und $I_{z3}$ des Fesselreglers 86 werden durch Wandler 94 in Kreiselsignale $\omega_{x3}$ bzw. $\omega_{z3}$ umgesetzt. Das Kreiselsignal $\omega_{x3}$ entspricht einer Winkelgeschwindigkeit um die erste Achse x oder die Eingangsachse 40. Das Kreiselsignal $\omega_{z3}$ entspricht einer Winkelgeschwindigkeit um die dritte Achse z oder die Eingangsachse 42.

Es stehen somit insgesamt sechs Kreiselsignale $\omega_{x1}, \omega_{y1}$ ; $\omega_{y2}$ , $\omega_{z2}$ ; $\omega_{x3}$ und $\omega_{z3}$ zur Verfügung. Diese Signale sind im allgemeinen Fall Linearkombinationen (mit bekannten Koeffizienten) der drei Komponenten der Winkelgeschwindigkeit und der drei Komponenten der Beschleunigung. Durch geeignete Signalverarbeitung können diese sechs Komponenten aus den sechs Kreiselsignalen gebildet werden. Im vorliegenden Fall sind die drei Wendekreisel 10,12 und 14 so ausgebildet, daß der dritte Wendekreisel 14 praktisch (d.h. abgesehen von Störeffekten) keine Beschleunigungsabhängigkeit zeigt. Die Koeffizienten der beschleunigungsabhängigkeit $K_{b1}$ und $K_{b2}$ des ersten und des zweiten Wendekreisels 10 bzw. 12 sind mit entgegengesetzten Vorzeichen gleich. Es ergibt sich dabei

$$\omega_x = \omega_{x3}$$
$$\omega_y = (\omega_{y1} + \omega_{y2})/2$$
$$\omega_z = \omega_{z3}$$
$$b_x = \omega_{x1} - \omega_{x3})/K_{b1}$$
$$b_y = (\omega_{y2} - \omega_{y1})/(K_{b1} - K_{b2})$$
$$b_z = (\omega_{z2} - \omega_{z3})/K_{b1}$$

Das ist eine prinzipielle Darstellung der Auswertung. Für höhere Genauigkeit ist eine vollständige Berücksichtigung der bekannten Fehlermodelle für dynamisch abgestimmte Kreisel erforderlich.

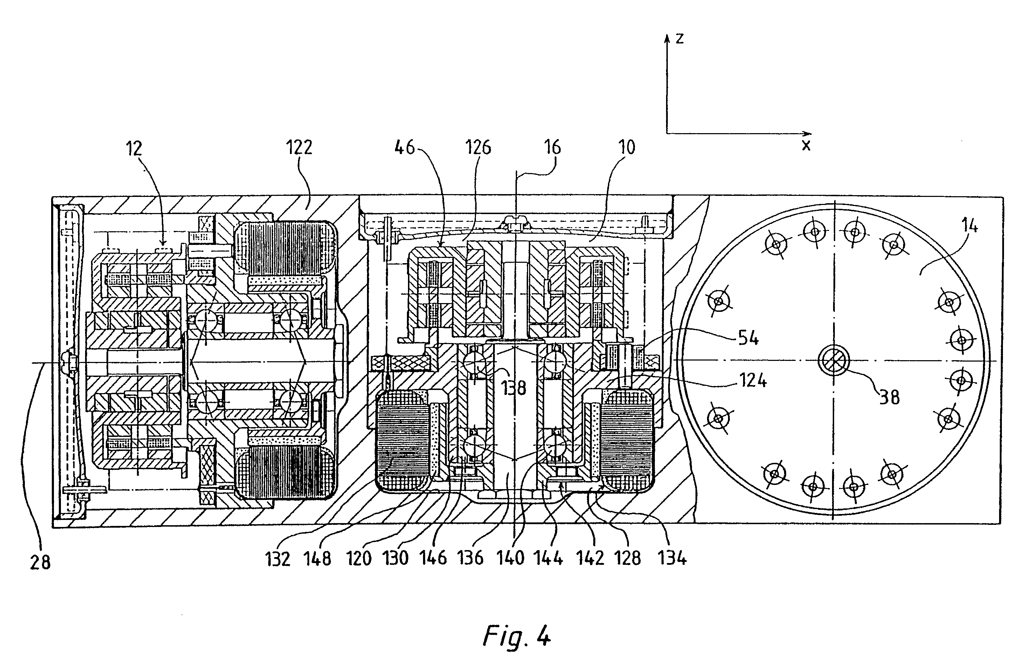

Diese Verarbeitung der drei Kreiselsignale ist in Fig.3 schematisch dargestellt.

Auf der linken Seite von Fig.3 erscheinen die sechs Kreiselsignale $\omega_{x1}$, $\omega_{y1}$, $\omega_{y2}$, $\omega_{z3}$, $\omega_{x3}$ und $\omega_{x3}$ , die von den drei Wendekreiseln geliefert werden. In einem Summationspunkt 96 werden $\omega_{x1}$ und $\omega_{z3}$ subtrahiert.

Die Differenz wird durch $K_{b1}$ dividiert, was durch Block 100 dargestellt ist. Dadurch ergibt sich die Komponente $b_x$ der Beschleunigung in Richtung der ersten Achse x.

In einem Summationspunkt 102 wird die Differenz von $\omega_{y2}$ und $\omega_{y1}$ gebildet. Diese Differenz wird durch $K_{b1} - K_{b2}$ dividiert, was durch Block 104 dargestellt ist. Dadurch ergibt sich die Komponente $b_y$

der Beschleunigung in Richtung der zweiten Achse y.

In einem Summationspunkt 106 wird die Differenz von $\omega_{z2}$ und $\omega_{z3}$ gebildet. Diese Differenz wird durch $K_{b2}$ dividiert, was durch Block 108 dargestellt ist. Dadurch ergibt sich die Komponente $b_z$ der Beschleunigung.

Die in Richtung der ersten Achse x fallende Komponente $\omega_x$ der Winkelgeschwindigkeit wird unmittelbar von dem dritten Wendekreisel 14 geliefert, dessen Kreiselsignal $\omega_{x3}$ nicht beschleunigungsabhängig ist.

In einem Summationspunkt 110 werden die Kreiselsignale $\omega_{y1}$ und $\omega_{y2}$ addiert. Die Summe wird durch 2 geteilt, was durch Block 112 dargestellt ist. Dadurch ergibt sich die in Richtung der zweiten Achse y fallende Komponente $\omega_y$ der Winkelgeschwindigkeit.

Die in Richtung der dritten Achse z fallende Komponente $\omega_z$ der Winkelgeschwindigkeit wird wieder unmittelbar von dem dritten Wendekreisel 14 geliefert, dessen Kreiselsignal $\omega_{z3}$ ebenfalls nicht beschleunigungsabhängig ist.

Fig.4 zeigt eine mehr konstruktive Darstellung einer mit drei zweiachsigen Wendekreiseln 10,12 und 14 aufgebauten Trägheitssensoranordnung. Die Wendekreisel 10,12 und 14 sind konstruktiv identisch. Es sind lediglich an den Wendekreiseln 10 und 12, wie beschrieben, axiale Unwuchten angebracht. Es ist daher hier nur der Wendekreisel 10 im einzelnen beschrieben. Die Wendekreisel 10,12,14 sind elektrisch gefesselte dynamisch abgestimmte Kreisel. Die Wendekreisel 10,12,14 sind von der Art, wie sie in der EP-OS-146 850 beschrieben ist.

Der Wendekreisel 10 sitzt in einem zylindrischen Hohlraum 120 eines langgestreckten, gemeinsamen Gehäuses 122, in welchem alle drei Wendekreisel 10,12,14 angeordnet sind. Der Hohlraum 120 ist durch eine Zwischenwandung 124 in eine in Fig.4 obere und eine untere Kammer 126 bzw. 128 unterteilt. In der Zwischenwandung 124 sitzt eine Lagerhülse 130, welche in die untere Kammer 126 hineinragt. In der unteren Kammer 126 ist um die Lagerhülse 130 herum ein Ringraum gebildet, in welchem der Stator 132 eines Antriebsmotors 134 sitzt.

In der Lagerhülse 130 ist eine Welle 136 in Kugellagern 138 und 140 drehbar gelagert. Am in Fig.4 unteren Ende der Welle 136 sitzt der Läufer 142 des Antriebsmotors 134. Der Läufer 142 sitzt mit einer Nabe 144 auf der Welle 136. An der Nabe 144 sitzt ein ringscheibenförmiger Mittelteil 146, der sich vor der in Fig.4 unteren Stirnfläche der Lagerhülse 130 radial nach außen erstreckt. Am Rand des Mittelteils 146 sitzt ein hohlzylindrischer Läuferteil 148, der koaxial zu Stator 132 und Lagerhülse 130 angeordnet ist und mit dem Stator einen Synchron-Hysteresemotor als Antriebsmotor 134 bildet.

In der in Fig.4 oberen Kammer 126 sitzt der Kreiselrotor 46, der mit der Welle 136 über Kreuzgelenke und einen Kardanrahmen verbunden ist. Die Kreuzgelenke und der Kardanrahmen können nach Art der DE-PS 3 213 720 und der im wesentlichen inhaltsgleichen US-PS 4 592 242 ausgebildet sein.

Auf der Zwischenwand 124 sitzen Abgriffe 48 und Drehmomenterzeuger 52 in der Papierebene von Fig.4 und in einer dazu senkrechten Ebene. Die Abgriffe 48 und Drehmomenterzeuger können nach Art der EP-OS-146 850 ausgebildet sein. Der Wandler 62 würde dann ein kraftmessender Geber sein, der die Reaktionskraft auf den Drehmomenterzeuger in ein Kreiselsignal umsetzt.

Bei der Ausführung nach Fig.4 sind die drei Wendekreisel 10,12 und 14 in einem langgestreckten gemeinsamen Gehäuse 122 angeordnet. Die Drallachse 28 des zweiten Wendekreisels 12 verläuft in Längsrichtung des Gehäuses 122. Die Drallachsen 16 und 38 der Wendekreisel 10 und 14 liegen senkrecht zu dieser Längsrichtung und senkrecht zueinander. Es ergibt sich so eine sehr kompakte Trägheitssensoranordnung.

**Patentansprüche**

1.  Trägheitssensoranordnung zur Messung der auf drei Achsen bezogenen Komponenten der Winkelgeschwindigkeit und der Beschleunigung dadurch gekennzeichnet, daß

    (a) drei zweiachsige Wendekreisel (10,12,14) vorgesehen sind,
    (b) die Wendekreisel (10,12,14) definiert unterschiedliche Beschleunigungsempfindlichkeit zeigen und
    (c) die sechs Kreiselsignale ($\omega_{x1}$, $\omega_{y1}$; $\omega_{y2}$, $\omega_{z2}$; $\omega_{x3}$, $\omega_{z3}$) der Wendekreisel (10,12,14) zur Bildung von sechs Ausgangssignalen so linearkombiniert sind, daß

    -   drei Ausgangssignale ($\omega_x$, $\omega_y$, $\omega_z$) beschleunigungsunabhängig die Komponenten der Winkelgeschwindigkeit und
    -   drei Ausgangssignale ($b_x$, $b_y$, $b_z$) winkelgeschwindigkeitsunabhängig die Komponenten der Beschleunigung wiedergeben.

2.  Trägheitssensoranordnung nach Anspruch 1, dadurch geknnzeichnet, daß die zweiachsigen Wendekreisel (10,12,14) elektrisch gefesselte, dynamisch abgestimmte Kreisel sind.

3.  Trägheitssensoranordnung nach Anspruch 1, dadurch gekennzeichnet, daß die drei zweiachsigen Wendekreisel (10,12,14)

-   mit ihren Drallachsen (16,28,38) parallel zu je einer von drei zueinander orthogonalen Achsen (x,y,z) ausgerichtet sind und
-   die beiden Eingangsachsen (18,20;30,32;40,42) jedes Wendekreisels (10,12,14), dessen Drallachse (16,28,38) nach einer der besagten drei Achsen (z,x,y) ausgerichtet ist, parallel zu je einer der beiden anderen Achsen (x,y; y,z; x,z) verlaufen.

4.  Trägheitssensoranordnung nach Anspruch 3, dadurch gekennzeichnet, daß

    (a) die Eingangsachsen (18,20) des ersten Wendekreisels (10) parallel zu einer ersten bzw. einer zweiten der besagten orthogonalen Achsen (x,y) angeordnet sind,
    (b) die Eingangsachsen (30,32) des zweiten Wendekreisels (12) parallel zu der zweiten bzw. dritten Achse (y,z) angeordnet sind,
    (c) die Eingangsachsen (40,42) des dritten Wendekreisels (14) parallel zu der ersten bzw. dritten Achse (x,z) angeordnet sind,
    (d) der erste Wendekreisel (10) eine axiale Unwucht aufweist, so daß er

    -   bei einer Beschleunigung ($b_x$) parallel zu der ersten Achse (x) einen mit einem ersten Faktor ($K_{b1}$) beschleunigungsproportionalen Anteil des Kreiselsignals ($\omega_{x1}$) des ersten Wendekreisels (10) liefert, das einer Winkelgeschwindigkeit um die erste Achse entspricht, und
    -   bei einer Beschleunigung ($b_y$) parallel zu der zweiten Achse (y) einen mit dem ersten Faktor ($K_{b1}$) beschleunigungsproportionalen Anteil ($\omega_{yl}$) des Kreiselsignals des ersten Wendekreisels (10) liefert, das einer Winkelgeschwindigkeit um die zweite Achse (y) entspricht,

    (e) der zweite Wendekreisel (12) eine axiale Unwucht aufweist, so daß er

    -   bei einer Beschleunigung ($b_y$) parallel zu der zweiten Achse (y) einen mit einem zweiten, von dem ersten Faktor ($k_{b1}$) verschiedenen Faktor ($k_{b2}$) beschleunigungsproportionalen Anteil des Kreiselsignals ($\omega_{y2}$) des zweiten Wendekreisels (12) liefert, das einer Winkelgeschwindigkeit um die zweite Achse (y) entspricht, und

- bei einer Beschleunigung ($b_z$) parallel zu der dritten Achse (z) einen mit dem zweiten Faktor ($k_{b2}$) beschleunigungsproportionalen Anteil des Kreiselsignals ($\omega_{z2}$) des zweiten Wendekreisels (12) liefert, das der Winkelgeschwindigkeit um die dritte Achse (z) entspricht,

(f) der dritte Wendekreisel (14) auf Beschleunigungen nicht anspricht,

(g) die Kreiselsignale ($\omega_{x1}, \omega_{y1}$; $\omega_{y2}; \omega_{z2}$; $\omega_{x3}.\omega_{z3}$) der Wendekreisel (10,12,14) auf Auswertermittel geschaltet sind, welche

($g_1$) zur Bildung der Komponenten der Winkelgeschwindigkeit

- das einer Winkelgeschwindigkeit um die erste Achse (x) entsprechende Kreiselsignal ($\omega_{x3}$) des dritten Wendekreisels (14) als Maß für die Komponente ($\omega_x$) der Winkelgeschwindigkeit in Richtung der ersten Achse (x) liefert,
- den Mittelwert der einer Winkelgeschwindigkeit um die zweite Achse (y) entsprechenden Kreiselsignale ($\omega_{y1}$, $\omega_{y2}$) des ersten und des zweiten Wendekreisels (10,12) als Maß für die Komponente ($\omega_y$) der Winkelgeschwindigkeit in Richtung der zweiten Achse (y) liefert und
- das einer Winkelgeschwindigkeit um die dritte Achse (z) entsprechende Kreiselsignal ($\omega_{z3}$) des dritten Wendekreisels (14) als Maß für die Komponente ($\omega_z$) der Winkelgeschwindigkeit in Richtung der dritten Achse (z) liefert und

($g_2$) zur Bildung der Komponenten der Beschleunigung

- die Differenz ($\omega_{x1} -\omega_{x3}$) der den Winkelgeschwindigkeiten um die erste Achse (x) entsprechenden Kreiselsignale ($\omega_{x1}$, $\omega_{x3}$) des ersten und des dritten Wendekreisels (10,14) als Maß für die Komponente ($b_x$) der Beschleunigung in Richtung der ersten Achse (x) liefert,
- die Differenz ($\omega_{y2} - \omega_{y1}$) der den Winkelgeschwindigkeiten um die zweite Achse (y) entsprechenden Kreiselsignale ($\omega_{y2}, \omega_{y1}$) des zweiten und des ersten Wendekreisels (12,10) als Maß für die Komponente ($b_y$) der Beschleunigung in Richtung der zweiten Achse (y) liefert und
- die Differenz ($\omega_{z2} - \omega_{z3}$) der den Winkelgeschwindigkeiten um die dritte Achse (z) entsprechenden Kreiselsignale ($\omega_{z2}$, $\omega_{z3}$) des zweiten und des dritten Wendekreisels (12,14) als Maß für die Komponente ($b_z$) der Beschleunigung in Richtung der dritten Achse (z) liefert.

5. Trägheitssensoranordnung nach Anspruch 4, dadurch gekennzeichnet, daß der erste und der zweite Faktor ($K_{b1}$, $K_{b2}$) mit entgegengesetztem Vorzeichen gleich sind.

**Claims**

1. Inertial sensor arrangement for measuring the components of the angular rate and of the acceleration referenced to three axes, **characterized in that**

   (a) three two-axis rate gyros (10, 12, 14) are provided,
   (b) the rate gyros (10, 12, 14) have definedly different acceleration sensitivites, and
   (c) the six gyro signals ($\omega_{x1}$, $\omega_{y1}$; $\omega_{y2}$, $\omega_{z2}$, $\omega_{x3}, \omega_{z3}$) of the rate gyros (10, 12, 14) are linearly combined for forming six output signals such that

   - three output signals ($\omega_x$, $\omega_y$, $\omega_z$,) represent the components of the angular rate independently of the acceleration, and
   - three output signals ($b_x$, $b_y$, $b_z$,) represent the components of the acceleration independently of the angular rate.

2. Inertial sensor arrangement as set forth in claim 1, **characterized in that** the two-axis rate gyros (10, 12, 14) are electrically caged, dynamically tuned gyros.

3. Inertial sensor arrangement as set forth in claim 1, **characterized in that**

   (a) the spin axes (16, 28, 38) of the three two-axis rate gyros (10, 12, 14) are parallel to one of three mutually orthogonal axes (x, y, z) each, and

(b) the two input axes (18, 20; 30, 32; 40, 42) of each rate gyro (10, 12, 14), the spin axis (16, 28, 38) of which is aligned with one of said three axes (z, x, y), extend parallel to one of the two other axes (x, y; y, z; x, z) each.

4. Inertial sensor arrangement as set forth in claim 3, **characterized in that**

(a) the input axes (18, 20) of the first rate gyro (10) are parallel to a first and a second of said orthogonal axes (x, y), respectively,

(b) the input axes (30, 32) of the second rate gyro (12) are parallel to the second and the third axis (y, z), respectively,

(c) the input axes (40, 42) of the third rate gyro (14) are parallel to the first and the third axis (x, z), respectively,

(d) the first rate gyro (10) has an axial unbalanced mass such that,

- with an acceleration $(b_x)$ parallel to the first axis (x), it supplies a component of the gyro signal $(\omega_{x1})$ of the first rate gyro (10), which component is proportional to the acceleration with a first factor $(K_{b1})$ and which gyro signal $(\omega_{x1})$ corresponds to an angular rate about the first axis, and

- with an acceleration $(b_y)$ parallel to the second axis (y), it supplies a component of the gyro signal $(\omega_{y1})$ of the first rate gyro (10), which component is proportional to the acceleration with the first factor $(K_{b1})$ and which gyro signal $(\omega_{y1})$ corresponds to an angular rate about the second axis (y),

(e) the second rate gyro (12) has an axial unbalanced mass such that,

- with an acceleration (by) parallel to the second axis (y), it supplies a component of the gyro signal $(\omega_{y2})$ of the second rate gyro (12), which component is proportional to the acceleration with a factor $(K_{b2})$ different from the first factor $(K_{b1})$ and which gyro signal $(\omega_{y2})$ corresponds to an angular rate about the second axis (y), and

- with an acceleration $(b_z)$ parallel to the third axis (z), it supplies a component of the gyro signal $(\omega_{z2})$ of the second rate gyro (12), which component is proportional to the acceleration with the second factor $(K_{b2})$ and which gyro signal $(\omega_{z2})$ corresponds to an angular rate about the third axis (z),

(f) the third rate gyro (14) does not respond to accelerations,

(g) the gyro signals $(\omega_{x1}, \omega_{y1}; \omega_{y2}, \omega_{z2}; \omega_{x3}, z3)$ of the rate gyros (10, 12, 14) are applied to evaluation means which,

(g₁) for forming the components of the angular rate, supplies

- the gyro signal $(\omega_{x3})$ of the third rate gyro (14) which corresponds to an angular rate about the first axis (x) and which is indicative of the component $(\omega_x)$ of the angular rate in the direction of the first axis (x),

- the mean value of the gyro signals $(\omega_{y1}, \omega_{y2})$ of the first and the second rate gyros (10, 12) which correspond to an angular rate about the second axis (y), which mean value is indicative of the component $(\omega_y)$ of the angular rate in the direction of the second axis (y), and

- the gyro signal $(\omega_{z3})$ of the third rate gyro (14') which corresponds to an angular rate about the third axis (z) and which is indicative of the component $(\omega_z)$ of the angular rate in the direction of the third axis (z), and

(g₂) for forming the components of the acceleration, supplies

- the difference $(\omega_{x1} - \omega_{x3})$ of the gyro signals $(\omega_{x1}, \omega_{x3})$ of the first and the third rate gyros (10, 14) which correspond to an angular rate about the first axis (x) and which difference is indicative of the component $(b_x)$ of the acceleration in the direction of the first axis (x),

- the difference $(\omega_{y2} - \omega_{y1})$ of the gyro signals $(\omega_{y2}, \omega_{y1})$ of the second and the first rate gyros (12, 10) which correspond to an angular rate about the second axis (y) and which difference is indicative of the component $(b_y)$ of the acceleration in the direction of the second axis (y), and

- the difference $(\omega_{z2} - \omega_{z3})$ of the gyro signals $(\omega_{z2}, \omega_{z3})$ of the second and the third rate gyros (12, 14) which correspond to an angular rate about the third axis (z) and which difference is indicative of the component ($b_z$) of the acceleration in the direction of the third axis (z).

5. Inertial sensor arrangement as set forth in claim 4, **characterized in that** the first and the second factors ($K_{b1}$, $K_{b2}$) are equal with opposite sign.

## Revendications

1. Disposition de capteurs inertiels destinée à mesurer les composantes de la vitesse angulaire et de l'accélération en référence à trois axes, caractérisée par le fait que

   (a) on a prévu trois gyromètres biaxiaux (10,12,14),

   (b) les gyromètres (10,12,14) ont des sensibilités d'accélération différentes de manière définie, et

   (c) les six signaux de gyroscope ($\omega_{x1}$, $\omega_{y1}$; $\omega_{y2}$,$\omega_{z2}$; $\omega_{x3}$, $\omega_{z3}$) des gyromètres (10,12,14) sont linéairement combinés afin de former six signaux de sortie de sorte que

   - trois signaux de sortie ($\omega_x$, $\omega_y$, $\omega_z$) représentent les composantes de la vitesse angulaire indépendemment de l'accélération, et

   - trois signaux de sortie ($b_x$, $b_y$, $b_z$) représentent les composantes de l'accélération indépendemment de la vitesse angulaire.

2. Disposition de capteurs inertiels selon la revendication 1, caractérisée par le fait que les gyromètres biaxiaux (10,12,14) sont des gyromètres électriquement restreints et dynamiquement accordés.

3. Disposition de capteurs inertiels selon la revendication 1, caractérisée par le fait que les trois gyromètres biaxiaux (10,12,14)

   - sont alignés avec leurs axes de spin (16,28,38) Parallèlement à respectivement l'un des trois axes (x,y,z) orthogonaux, et

   - les deux axes d'entrée (18,20;30,32;40,42) de chaque gyromètre (10, 12,11) dont l'axe de spin (16,28,38) est aligné selon l'un desdits trois axes (z,x,y), s'étendent parallèlement à respectivement l'un des deux autres axes (x,y;y,z;x,z).

4. Disposition de capteurs inertiels selon la revendication 3, caractérisée par le fait que

   (a) les axes d'entrée (18,20) du premier gyromètre (10) sont disposés parallèlement à un premier ou un second desdits axes orthogonaux (x,y),

   (b) les axes d'entrée (30,32) du second gyromètre (12) sont disposés parallèlement au second ou au troisième axe (y,z),

   (c) les axes d'entrée (40,42) du troisième gyromètre (14) sont disposés parallèlement au premier ou troisième axe (x, z),

   (d) le premier gyromètre (10) présente un balourd axial de sorte que

   - dans le cas d'une accélération ($b_x$) parallèlement au premier axe (x), il fournit une part du signal de gyroscope ($\omega_{x1}$) du premier gyromètre (10), qui est proportionnelle en accélération à un premier facteur ($k_{b1}$), le signal correpondant à une vitesse angulaire autour du premier axe, et

   - dans le cas d'une accélération ($b_y$) parallèlement au second axe (y), il fournit une part ($\omega_{y1}$) du signal de gyroscope du premier gyromètre (10), qui est proportionnelle en accélération au premier facteur ($k_{b1}$), le signal correspondant à une vitesse angulaire autour du second axe (y),

   (e) le second gyromètre (12) présente un balourd axial de sorte que

   - dans le cas d'une accélération ($b_y$) parallèlement au second axe (y), il fournit une part du signal de gyroscope ($\omega_{y2}$) du second gyromètre (12), qui est proportionnelle en accélération à un second facteur ($k_{b2}$) différent du premier facteur ($k_{b1}$), le signal correspondant à une vitesse angulaire autour du second axe (y), et

   - dans le cas d'une accélération ($b_z$) parallèlement au troisième axe (z), il fournit une part du signal de gyroscope ($\omega_{z2}$) du second gyromètre (12), qui est proportionnelle en accélération au second facteur ($k_{b2}$),le signal correspondant à une vitesse angulaire autour du troisième axe (z),

   (f) le troisième gyromètre (14) ne répond pas aux accélérations,

   (g) les signaux de gyroscope ($\omega_{x1}$,$\omega_{y1}$; $\omega_{y2}$, $\omega_{z2}$; $\omega_{x3}$, $\omega_{z3}$) des gyromètres (10,12,14) sont appliqués à des moyens d'évaluation qui,

      ($g_1$) afin de former les composantes de la vitesse angulaire

      - fournit le signal de gyroscope ($\omega_{x3}$) du troisième gyromètre (14) correspondant à une vitesse angulaire autour du premier axe (x), en tant que mesure pour la composante

($\omega_x$) de la vitesse angulaire dans la direction du premier axe (x),

- fournit la moyenne des signaux de gyroscope ($\omega_{y1}, \omega_{y2}$) du premier et du second gyromètre (12,12) correspondant à une vitesse angulaire autour du second axe (y), en tant que mesure pour la composante ($\omega_y$) de la vitesse angulaire dans la direction du second axe (y), et

- fournit le signal de gyroscope ($\omega_{z3}$) du troisième gyromètre (14) correspondant à une vitesse angulaire autour du troisième axe (z), en tant que mesure pour la composante ($\omega_z$) de la vitesse angulaire dans la direction du troisième axe (z), et

(g₂) afin de former les composantes de l'accélération

- fournit la différence ($\omega_{x1}-\omega_{x3}$) des signaux de gyroscope ($\omega_{x1}, \omega_{x3}$) du premier et du troisième gyromètre (10,14) correspondant aux vitesses angulaires autour du premier axe (x), en tant que mesure pour la composante ($b_x$) de l'accélération dans la direction du premier axe (x),

- fournit la différence ($\omega_{y2}-\omega_{y1}$) des signaux de gyroscope ($\omega_{y2}, \omega_{y1}$) du second et du premier gyromètre (12,10) correspondant aux vitesses angulaires autour du second axe (y), en tant que mesure pour la composante ($b_y$) de l'accélération dans la direction du second axe (y), et

- fournit la différence ($\omega_{z2}-\omega_{z3}$) des signaux de gyroscope ($\omega_{z2}, \omega_{z3}$) du second et du troisième gyromètre (12,14) correspondant aux vitesses angulaires autour du troisième axe (z), en tant que mesure pour la composante ($b_z$) de l'accélération dans la direction du troisième axe (z).

5. Disposition de capteurs inertiels selon la revendication 4, caractérisée par le fait que le premier et le second facteur ($k_{b1}$, $k_{b2}$) sont égaux à signes opposés.

*Fig.1*

Fig.2

Fig. 3

*Fig. 4*